# EUROPÄISCHE PATENTSCHRIFT

(11) **EP 0 518 010 B1**
(45) Veröffentlichungstag und Bekanntmachung des Hinweises auf die Patenterteilung: **07.06.1995**
(21) Anmeldenummer: 92105016.7
(22) Anmeldetag: 24.03.1992
(51) Int. Cl.: F16B 13/06

(54) **Verfahren zur Herstellung eines Schraubdübels und nach dem Verfahren hergestellter Dübel**
Method for manufacturing a screw plug and screw plug thus made
Procédé pour la fabrication d'une vis-cheville et vis-cheville ainsi réalisée

(30) Priorität: 14.06.1991 DE 4119650
(43) Veröffentlichungstag der Anmeldung: 16.12.1992
(73) Patentinhaber: UMFORMTECHNIK BENDER GMBH & CO. KG, D-35444 Biebertal (DE)
(72) Erfinder: Irmler, Egon, W-6301 Pohlheim 4/OT Holzehim (DE)
(74) Vertreter: Knefel, Siegfried, Dipl.-Math.

(56) Entgegenhaltungen:
- EP-A- 087 648
- DE-A- 3 528 289
- DE-C- 162 969
- DE-U- 8 436 722
- GB-A- 408 668
- US-A- 1 394 925

## Beschreibung

Die Erfindung betrifft ein Verfahren zur Herstellung eines Schraubdübels sowie einen nach dem Verfahren hergestellten Schraubdübel, an dessen vorderem Ende in Einsteckrichtung gesehen ein Schraubgewinde vorgesehen ist und davor liegende spreizbare Teile. Wird die Schraube im Eingriff mit dem Gewinde gedreht, spreizt sie die vor dem Gewinde liegenden Blechteile aufgrund der ausgeübten Zugkraft.

Nach einem zum Stand der Technik gehörenden, der Erfindung zugrunde liegenden Verfahren wird ein Blech so ausgestanzt und anschließend zu einem Zylinder zusammengerollt, daß zunächst eine Rohform des Dübels entsteht. Nach dem Einrollen des Bleches wird in den so geformten Hohlzylinder an einem Ende ein Gewinde eingeschnitten. In das Gewinde des Dübels greift eine Schraube. Durch den Einschneidevorgang des Gewindes bedingt weist dieses einen Grat auf. Der Grat muß nach dem Einschneidevorgang entfernt werden, damit die Schraube beim Eindrehen fassen kann. Das Einschneiden des Gewindes und das Entfernen des Grates sind relativ aufwendige Arbeitsgänge, die sich wegen des damit verbundenen Aufwandes kostenmäßig nachteilig bemerkbar machen, und zwar in erheblichem Maße, insbesondere da derartige Dübel in großer Stückzahl hergestellt werden.

Gemäß der DE-OS 32 10 262 A1 werden in das Blech nockenartige Vorsprünge eingewalzt, die nach dem Zusammenrollen des Bleches ein Gewinde bilden. Dieses Einwalzen erfordert einen zusätzlichen Arbeitsgang, der die Herstellung des Schraubdübels verteuert. Außerdem entsteht nach diesem Verfahren ein wenig genaues Gewinde, so daß die Gefahr besteht, daß die Gewindegänge der Schraube nicht mit den Nocken harmonieren und deshalb das Eindrehen der Schraube erschwert wird.

Würde das Gewinde gemäß der europäischen Offenlegungsschrift 0 087 648 A1 nur in einen Blechteil eingeprägt und anschließend dieser Blechteil zusammengerollt, ist durch den Vorgang des Zusammenrollens ein gleichmäßiges Innengewinde kaum zu erhalten, da die Erhebungen der einzelnen Gewindegänge beim Zusammenrollen ein Zuviel an Material ergeben. Dieses Zuviel muß sich beim Zusammenrollen irgendwohin verlagern und verursacht erhebliche Unregelmäßigkeiten im Gewinde. Aus diesem Grunde kann ein derartiges Gewinde nie vollkommen gleichmäßig nach dem Zusammenrollen sein.

Gemäß der gattungsbildenden DE-OS 35 28 289 A1 ist ein Schraubengewinde an einem Dübel bekannt, bei dem in einem Folgewerkzeug für die Blechverformung der Blechbereich für die Gewindeeindrückung so weit freigeschnitten wird, daß zwei oder mehrere kleine Blechflächen für die Gewindeschalen vorhanden sind. Nach dem Freischneiden werden die Halbschalen geformt und sogleich das Gewinde (Gewindegänge) eingeprägt (eingedrückt). Die Gewindeschalen bleiben hierbei in Einschubrichtung gesehen im vorderen Bereich zusammenhängend, um beispielsweise zur Verstärkung der Hülse im Gewindebereich einen Steg oder einen von der Blechplatte herumgelegten Kragen vorzusehen. Diese zusammenhängende Ausbildung der Gewindeteile hat den Nachteil, daß beim weiteren Verformen des Blechausschnittes zu einer Hülse sich das eingeprägte Gewinde in dem zusammenhängenden Bereich staucht und sich so kein vollkommen gleichmäßiges Gewinde nach dem Zusammenrollen ergibt.

Aufgabe der Erfindung ist es, ein Verfahren zur Herstellung eines Schraubdübels anzugeben, bei dem in einem Arbeitsgang der Dübel mit dem Schraubgewinde derart hergestellt wird, daß eine zusätzliche Bearbeitung des Dübels, beispielsweise das Einschneiden des Gewindes oder das Entfernen des Grates entfällt.

Diese Aufgabe wird durch das Verfahren des Anspruches 1 gelöst sowie durch den nach dem Verfahren hergestellten Schraubdübel.

Dadurch, daß das Schraubgewinde in das noch flach ausgebreitet liegende Blech, das anschließend zylinderförmig zu dem Schraubdübel zusammengerollt wird, eingeprägt wird, kann die Herstellung des Schraubdübels mit einem einzigen Werkzeug in einem Arbeitsgang durchgeführt werden.

Das Prägen des Gewindes hat den Vorteil, daß dieser Vorgang in den Stanzvorgang integriert werden kann und kein gesonderter Arbeitsgang für das Einschneiden des Gewindes durchgeführt werden muß. Darüber hinaus entfallen gesonderte Arbeitsgänge, wie beispielsweise das Entfernen eines Grates oder der Einwalzvorgang von Nocken gemäß der DE-OS 32 10 262 A1. Der Dübel wird also als ein fertigfallendes Produkt hergestellt.

Dadurch, daß das Blech Ausstanzungen aufweist, derart, daß das Gewinde nach dem Zusammenrollen aus wenigstens drei längsliegenden Flächenteilen besteht, erhält man nach dem Zusammenrollen eine annähernd einhundertprozentige runde Form für das Gewinde, was die Voraussetzung für ein leichtgängiges Gewinde ist. Vor dem Zusammenrollen wird in diese Flächenteile mit Hilfe wenigstens eines Prägedornes jeweils ein Gewindeteil eingeprägt.

Da das Gewinde in weiterer Ausgestaltung der Erfindung tiefer als erforderlich in das Blech eingeprägt wird, entstehen Gewindegänge, welche nach dem Zusammenrollen denen der Schraube folgen und andererseits ein geringes Spiel zwischen dem Gewinde der Schraube und dem Gewinde des Dübels gewährleisten. Hierdurch wird mit Sicherheit erreicht, daß die Schraube leichtgängig in das Gewinde greift. Darüber hinaus werden durch die Übergröße des Gewindes kleinere Unregelmäßigkeiten, wie ein leichter Versatz der Gewindeteile zueinander, kleinere Unregelmäßigkeiten am Schraub- oder Hülsengewinde oder kleinere Rundlaufungenauigkeiten der Schraube ausgeglichen.

Nach dem Zusammenrollen des Dübels wird über die die Gewindeteile tragenden Flächenteile wenigstens teilweise eine Hülse geschoben, damit die Schraube das Gewinde beim Schraubvorgang nicht auseinanderdrückt.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: eine Draufsicht auf das Blech im Ausgangszustand;
- Fig. 2: einen Längsschnitt durch einen zusammengerollten Dübel;
- Fig. 3: einen Schnitt nach der Linie III-III der Fig. 2.

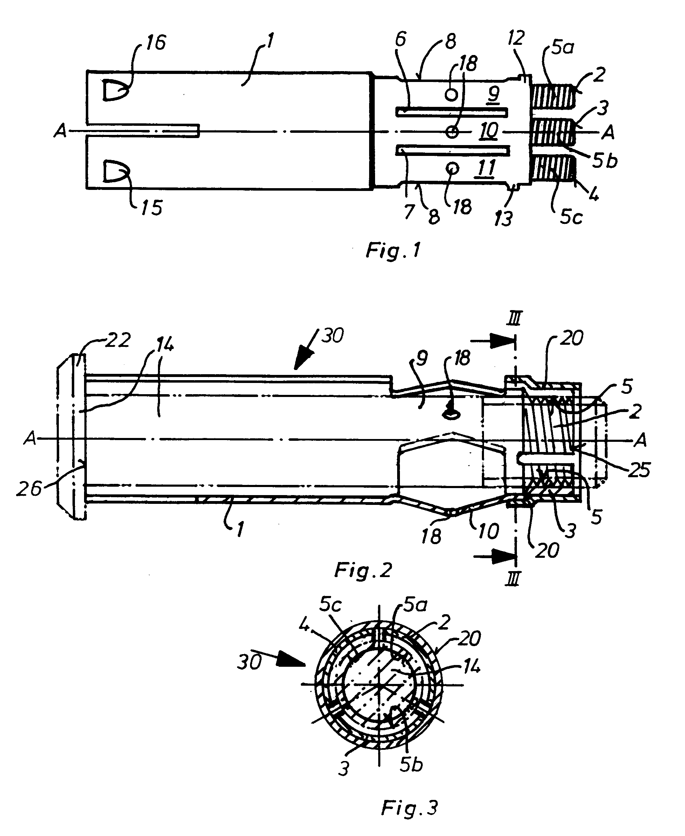

Fig. 1 zeigt ein aus einem größeren Stück ausgestanztes Blech (1). Das Blech (1) hat eine Form, derart, daß beim Zusammenrollen um die Achse (A-A) der wesentliche Teil des Dübels (30) (Fig. 2) entsteht. In den Flächenteilen (2, 3, 4) sind Gewindeteile (5a, 5b, 5c) eingeprägt, welche nach dem Zusammenrollen ein Innengewinde (5) bilden.

Das Blech (1) weist Ausstanzungen (6, 7, 8) auf, derart, daß beim Zusammenrollen des Bleches (1) um die Achse (A-A) zum Dübel (30) spreizbare Blechteile (9, 10, 11) gebildet werden. In den Teilen (9, 10, 11) sind Ausstanzungen in Form von Löchern (18) etwa in der Mitte liegend vorgesehen, die als Sollknickpunkte dienen, damit sich der Dübel (30) beim Hineindrehen der Schraube (14) in das Gewinde (5) durch den ausgeübten Zug an diesen Stellen symmetrisch in der Wand spreizt, und so ein Herausziehen aus der Wand nicht mehr möglich ist. Der Schraubkopf (22) stützt sich hierbei am linken Ende (26) des Dübels (30) ab.

Die Teile (12, 13) des Bleches (1) verzahnen sich beim Zusammenrollen des Bleches (1) zum Dübel (30) ineinander. Zusätzlich können über den Dübel (30) verteilt Ausbuchtungen (15, 16) vorgesehen sein, welche als Widerhaken dienen.

Fig. 2 und 3 zeigen Schnitte durch den fertigen Dübel (30). Das Blech (1) der Fig. 1 ist zum Dübel (30) zusammengerollt. Die die Gewindeteile (5a, 5b, 5c) tragenden Flächenteile (2, 3, 4) bilden ein Innengewinde (5), in das die Schraube (14) greift. Über die Flächenteile (2, 3, 4) ist eine Hülse (20) geschoben, die ein Auseinanderspreizen der Flächenteile (2, 3, 4) beim Hineindrehen der Schraube (14) verhindert. Die spreizbaren Blechteile (9, 10) weisen Ausstanzungen in Form von Löchern (18) auf, die die Sollknickpunkte bilden.

### Bezugszahlen

- 1: Blech
- 2, 3, 4: Flächenteile
- 5: Innengewinde
- 5a, 5b, 5c: Gewindeteile
- 6, 7, 8: Ausstanzungen
- 9, 10, 11: Blechteile
- 12, 13: Teile
- 14: Schraube
- 15, 16: Ausbuchtungen
- 18: Löcher
- 20: Hülse
- 22: Schraubkopf
- 25: rechtes Ende
- 26: linkes Ende
- 30: Dübel

## Patentansprüche

1. Verfahren zur Herstellung eines Schraubdübels, bei dem in ein Blech ein Gewinde für die Aufnahme einer Schraube eingeprägt oder eingedrückt wird, bei dem anschließend zwei oder mehrere, in Einschubrichtung gesehen im vorderen Bereich, zusammenhängende Gewindeschalen ausgestanzt werden, und das zu einem Zylinder
zusammengerollt wird,
**dadurch gekennzeichnet,** daß am vorderen Ende des Bleches (1) in Einsteckrichtung des Schraubdübels gesehen vor dem Zusammenrollen wenigstens drei Einschnitte ausgestanzt werden, zwischen denen längsliegende, das Gewinde tragende, freistehende Flächenteile (2, 3, 4) verbleiben, in die vor dem Zusammenrollen des Bleches (1) jeweils ein Gewindeteil (5a, 5b, 5c) eingeprägt wird.

2. Verfahren nach Anspruch 1, dadurch gekennzeichnet, daß während des Ausstanzens der Einschnitte das Einprägen der Gewindeteile (5a, 5b, 5c) in die Flächenteile (2, 3, 4) durchgeführt wird.

3. Verfahren nach Anspruch 1, dadurch gekennzeichnet, daß beim Einrollen des Bleches (1) die eingeprägten Gewindeteile (5a, 5b, 5c) ein Innengewinde (5) bilden.

4. Verfahren nach Anspruch 1, dadurch gekennzeichnet, daß das Gewinde (5) tiefer als für das Eindrehen der Schraube erforderlich in das Blech (1) eingeprägt wird.

5. Verfahren nach Anspruch 4, dadurch gekennzeichnet, daß der verwendete Prägedorn in seinen Gewindegängen eine Übergröße aufweist.

6. Verfahren nach Anspruch 1, dadurch gekennzeichnet, daß über die die Gewindeteile (5a, 5b, 5c) tragenden Flächenteile (2, 3, 4) des zusammengerollten Bleches (1) wenigstens teilweise eine Hülse (20) geschoben wird.

7. Verfahren nach einem der vorhergehenden Ansprüche, dadurch gekennzeichnet, daß in das noch nicht zusammengerollte Blech (1) in Einsteckrichtung gesehen vor den die Gewindeteile tragenden Flächenteilen (2, 3, 4) Längsschlitze (6, 7, 8) eingestanzt werden, welche spreizbare Blechteile (9, 10, 11) begrenzen.

8. Verfahren nach Anspruch 7, dadurch gekennzeichnet, daß in der Mitte eines jeden spreizbaren Blechteiles (9, 10, 11) jeweils wenigstens ein Loch (18) eingestanzt wird.

9. Verfahren nach Anspruch 6, dadurch gekennzeichnet, daß die Hülse (20) aus Metall besteht.

10. Verfahren nach Anspruch 6, dadurch gekennzeichnet, daß die Hülse (20) aus Kunststoff besteht.

11. Dübel, hergestellt gemäß dem Verfahren nach einem der vorhergehenden Ansprüche.

## Claims

1. Method of manufacturing a screw plug, in which a thread is punched or pressed into a metal plate for the holding of a screw, in which two or more thread shells connected in the front area, viewed in insertion direction, are then punched out and which is rolled up to form a cylinder,
**characterized in that** at least three incisions are punched out at the front end of the metal plate (1), viewed in insertion direction of the screw plug, prior to the rolling-up, between which longitudinally positioned, free-standing surface parts (2, 3, 4) bearing the thread remain, into each of which a thread part (5a, 5b, 5c) is embossed prior to the rolling-up of the metal plate (1).

2. Method according to claim 1, characterized in that the embossing of the thread parts (5a, 5b, 5c) into the surface parts (2, 3, 4) is executed during the punching-out of the incisions.

3. Method according to claim 1, characterized in that the embossed thread parts (5a, 5b, 5c) form an internal thread (5) in the rolling-up of the metal plate (1).

4. Method according to claim 1, characterized in that the thread (5) is embossed deeper into the metal plate (1) than necessary for the turning-in of the screw.

5. Method according to claim 4, characterized in that the used embossing mandrel has an outsize dimension in its thread turns.

6. Method according to claim 1, characterized in that a sleeve (20) is pushed at least partially over the surface parts (2, 3, 4) of the rolled-up metal plate (1) bearing the thread parts (5a, 5b, 5c).

7. Method according to one of the preceding claims, characterized in that longitudinal slots (6, 7, 8) which limit spreadable metal parts (9, 10, 11) are punched into the not yet rolled-up metal plate (1) in front of the surface parts (2, 3, 4) bearing the thread parts, viewed in insertion direction.

8. Method according to claim 7, characterized in that at least one hole (18) is punched in the centre of each spreadable metal part (9, 10, 11).

9. Method according to claim 6, characterized in that the sleeve (20) is made of metal.

10. Method according to claim 6, characterized in that the sleeve (20) is made of plastic.

11. Plug manufactured in accordance with the method according to one of the preceding claims.

## Revendications

1. Procédé pour fabriquer une cheville filetée, selon lequel on aménage par estampage ou impression, dans une tôle, un taraudage destiné à recevoir une vis, et selon lequel ensuite on découpe deux ou plusieurs coques filetées, qui sont réunies, dans la partie avant lorsqu'on regarde dans la direction d'insertion, et que l'on enroule pour former un cylindre,
caractérisé en ce que sur l'extrémité avant de la tôle (1), lorsqu' on regarde dans la direction d'enfichage de la cheville filetée, on découpe, avant l'enroulement, au moins trois entailles, entre lesquelles subsistent trois éléments de surface longitudinaux isolés (2,3,4), qui portent le filetage et dans lesquels respectivement une partie (5a, 5b, 5c) du filetage est formée par estampage avant l'enroulement de la tôle (1).

2. Procédé selon la revendication 1, caractérisé en ce que l'estampage des parties (5a,5b,5c) du filetage dans les éléments de surface (2,3,4) est exécuté pendant le découpage des entailles.

3. Procédé selon la revendication 1, caractérisé en ce que lors de l'enroulement de la tôle (1), les parties estampées (5a,5b,5c) du filetage forment un taraudage (5).

4. Procédé selon la revendication 1, caractérisé en ce que le taraudage (5) est formé, dans la tôle (1), sur une profondeur plus importante que cela n'est nécessaire pour le vissage de la vis.

5. Procédé selon la revendication 4, caractérisé en ce que les pas de filetage du mandrin d'estampage utilisé possèdent une surcote.

6. Procédé selon la revendication 1, caractérisé en ce qu'on emmanche au moins partiellement une douille (20) par-dessus les éléments de surface (2,3,4), qui portent les parties (5a,5b,5c) du filetage, de la tôle enroulée (1).

7. Procédé selon l'une des revendications précédentes, caractérisé en ce que dans la tôle (1) non encore enroulée, on découpe, en avant des éléments de surface (2,3,4) qui portent des parties du filetage, lorsqu' on regarde dans la direction d'enfichage, des fentes longitudinales (6,7,8), qui limitent des éléments de tôle (9,10,11) pouvant être écartés.

8. Procédé selon la revendication 7, caractérisé en ce qu'on découpe respectivement au moins un trou (18) au centre de chaque élément de tôle (9,10,11) pouvant être écarté.

9. Procédé selon la revendication 6, caractérisé en ce que la douille (20) est réalisée en un métal.

10. Procédé selon la revendication 6, caractérisé en ce que la douille (20) est réalisée en une matière plastique.

11. Cheville, fabriquée conformément au procédé selon les revendications précédentes.
